# EUROPEAN PATENT SPECIFICATION

(11) **EP 2 321 047 B1**
(45) Date of publication and mention of the grant of the patent: **20.05.2015**
(21) Application number: 09766417.1
(22) Date of filing: 16.06.2009
(51) Int. Cl.: B01J 21/18, B01J 23/882, B01J 23/888, B01J 35/00, B82Y 30/00, B82Y 40/00, H01M 4/38, H01M 4/583, H01M 4/96, B01J 37/02, C01B 31/02, D01F 9/127

(54) **CARBON FIBER AND CATALYST FOR PRODUCTION OF CARBON FIBER**
KOHLEFASER UND KATALYSATOR ZUR HERSTELLUNG VON KOHLEFASER
FIBRE DE CARBONE ET CATALYSEUR PERMETTANT DE PRODUIRE UNE FIBRE DE CARBONE

(30) Priority: 18.06.2008 JP 2008159789
(43) Date of publication of application: 18.05.2011
(73) Proprietor: Showa Denko K.K., Tokyo 105-8518 (JP)
(72) Inventor: KAMBARA, Eiji, Kawasaki-shi Kanagawa 210-0858 (JP); KITAZAKI, Akihiro, Kawasaki-shi Kanagawa 210-0858 (JP)
(74) Representative: Strehl Schübel-Hopf & Partner
(86) International application number: PCT/JP2009/002726
(87) International publication number: WO 2009/153969

(56) References cited:
- EP-A- 1 782 884
- WO-A-2006/050903
- WO-A-2008/075766

## Description

### Technical Field

The present invention relates to a carbon fiber and a catalyst for production of the carbon fiber. In more detail, the present invention relates to a carbon fiber suitably used as a filler to be added into a material such as metal, resin and ceramics so as to improve electric conductivity and heat conductivity, as an electron emitting material for FED (Field Emission Display), as a catalyst carrier for various reactions, moreover as a medium for storing hydrogen, methane or like various gases, or as an electrode material of an electrochemical element such as a battery and a capacitor, and a catalyst for production of the carbon fiber.

### Background Art

As a method for producing a carbon fiber, there is known that a method for growing a carbon fiber using a catalyst as a core, namely, a so-called chemical vapor deposition method (hereinafter referred to as CVD method). As the CVD method, a method in which a catalytic metal is supported on a carrier for use and a method in which an organic metal complex is thermally decomposed in a vapor phase so as to generate a catalyst without using a carrier (fluidized vapor phase method) are known.

As the carbon fiber obtained by the method of generating a catalyst in a vapor phase (fluidized vapor phase method), PTL 5 shows a carbon fiber having the total metal element content of 0.3 to 0.7 % by mass and the transition metal element content of 0.1 to 0.2 % obtained by a method (fluidized vapor phase method) in which an organic metal complex such as ferrocene and a carbon source such as benzene are fluidized, and the carbon source is thermally decomposed under a hydrogen atmosphere using a metal particle as a catalyst obtained by thermal decomposition of the metal complex. The carbon fiber obtained by this fluidized vapor phase method has many defects in a graphite layer and has a problem that without heat treatment at a high temperature, electric conductivity does not emerge even if being added to a resin or the like as filler. Thus, with the fluidized vapor phase method, it is difficult to inexpensively produce a carbon fiber having desired properties.

On the other hand, a method using a catalyst carrier is roughly divided into (1) a method of using a platy substrate carrier; and (2) a method of using a particulate carrier.

With the method (1) using a platy substrate carrier, since the size of the catalytic metal to be supported can be arbitrarily controlled by applying various film formation techniques, this method is usually used in a laboratory demonstration of research. For example, NPL 2 discloses that using those in which an aluminum layer having thickness of 10 nm, an iron layer having thickness of 1 nm, and a molybdenum layer having thickness of 0.2 nm are generated on a silicon substrate can give a tube-like multiwall nanotube or a double-wall nanotube having a fiber diameter of ap-proximately 10 to 20 nm. Also, PTL 4 discloses a catalyst by supporting a metal composed of a combination of Ni, Cr, Mo and Fe or a combination of Co, Cu, Fe and Al on a platy substrate carrier by a sputtering method or the like. And PLT 4 describes manufacture of a carbon fiber therewith. In order to use the carbon nanotube as filler obtained by this method using a platy substrate carrier to be added into a resin or the like, it is necessary to be separated from the substrate and collected. The carbon nanotube collected as the above substantially contains only catalytic metal component as impurities, but since generation efficiency of the carbon nanotube with respect to a catalyst mass is markedly low, the content of the catalytic metal component in the carbon fiber is likely to be high. Moreover, if this method is to be industrially utilized, since a platy substrate surface area can not be ensured unless a number of substrates are arranged, not only that device efficiency is low but also many processes such as supporting of the catalytic metal on the substrate, synthesis of the carbon nanotube, collection of the carbon nanotube from the substrate and the like are needed, which is not economical, and industrial utilization has not been realized yet.

On the other hand, with the method (2) using the particulate carrier, since a specific surface area of the catalyst carrier is larger than that of the method using the substrate carrier, not only that the device efficiency is favorable but also a reactor used for various chemical synthesis can be applied, and this method has merits that realizes not only a production method based on batch processing such as the substrate method but also continuous reactions.

However, with the method using the particulate carrier, a catalyst carrier is unavoidably mixed in a carbon fiber product, and it is difficult to obtain a carbon fiber with high purity.

As a method for reducing the amount of impurities in the carbon fiber obtained by the method using the particulate carrier, (1) a method of heat treatment at a high temperature; and (2) a method of washing and removing with acid or base are known, but both of the methods have complicated processes and are not economical. Particularly, in the washing and removing of the impurities with acid or base, since the catalyst carrier and the catalytic metal in the carbon fiber are covered by a carbon overcoat in many cases, it is difficult to fully remove the impurities unless the carbon overcoat is removed by using an oxidizing acid such as nitric acid or by performing partial oxidization. If an oxidizing acid is used, not only the carbon overcoat on the surface of the carrier or the catalyst but also the carbon fiber itself might be damaged and become defective. The carbon fiber affected by an acid might have lowered electric conductivity or lowered heat conductivity, or dispersibility or filling performance into a resin might be deteriorated.

Various catalysts for production of a carbon fiber are proposed: For example, NPL 1 discloses a catalyst comprising Fe element and Co element supported by a carbonate carrier by an impregnating method. As the carbonate carrier, magnesium carbonate, calcium carbonate, strontium carbonate, and barium carbonate are shown. It is stated that by optimizing relative proportions of Fe and Co in this catalyst, the generation efficiency of the carbon fiber can be improved as compared with the case of Fe only or Co only.

PTL 1 discloses a catalyst containing Fe element and at least one element selected from the group consisting of V, Nb, Ta, Cr, Mo, W, Mn, Tc, and Re. Specifically, the PTL 1 discloses that the catalyst is obtained by supporting a metal element composed of a combination of Fe and Mo, Fe and Cr, Fe and Ce or Fe and Mn on a carrier using the impregnating method.

PTL 2 discloses a catalyst obtained by coprecipitation of a metal having fibril-forming catalytic properties composed of Fe or a combination of Fe and Mo and a carrier metal component such as Al and Mg. It is disclosed that using this catalyst, a carbon fiber having the content of impurities from the catalytic metal of 1.1 % by mass or less and the content of the impurities from the catalyst carrier of 5 % by mass or less can be obtained.

PTL 3 discloses a catalyst obtained by coprecipitation of a catalytic metal component composed of a combination of Mn, Co, and Mo or a combination of Mn and Co and a carrier metal component such as Al and Mg.

### Citation List

### Patent Literature

[PTL 1] U.S. Patent No. 5707916
[PTL 2] Japanese Patent Laid-Open No. 2003-205239
[PTL 3] International Publication No. WO2006-50903
[PTL 4] U.S. Patent No. 6518218
[PTL 5] Japanese Patent Laid-Open No. 2001-80913

### Non Patent Literature

[NPL 1] J. phys. chem. B, Vol. 109, No. 20, 2005
[NPL 2] Chemical Physics Letters, 374 (2003) 222-228

### Summary of Invention

### Technical Problem

The production amount of the carbon fiber per catalyst mass is increased by the catalyst composed of the combination of Fe and Co described in NPL 1, or the catalyst composed of the combination of Fe and Mo, Fe and Cr, Fe and Ce or Fe and Mn described in PTL 1 as compared with the case of a catalyst composed of Fe only , but it is not necessarily sufficient and the content of impurities in the obtained carbon fiber is still large. Therefore, if the carbon fiber obtained by the NPL 1 or PTL 1 is added as filler into a resin, strength of a resin composite material might be lowered by an influence of the impurities. It is known that the catalyst manufacture by coprecipitation as shown in PTL 2 and PTL 3 is low in efficiency and high in cost. Also, the obtained carbon fiber has relatively low electric conductivity.

With the method using the substrate carrier as described in PTL 4, since various film forming techniques that are sputtering method, CVD method and the like can be applied in order to bring the catalytic component into close contact with the substrate, and film thickness control and proportion control can be carried out with precision, which is suitable for research of carbon fiber in the laboratory. However, its generation efficiency is low, and it is not suitable for industrial applications. Also, if used as filler to be added to the resin, it needs to be separated from the substrate, which increases the number of processes.

With a method as described in PTL 5, a high-temperature reaction field at 1000 degrees cent. or above is required in general, and since the obtained carbon fiber contains a tar component and crystallinity of the carbon fiber itself is low, heat treatment is required as post-treatment, which raises a manufacturing cost.

As mentioned above, it has been difficult to obtain a carbon fiber which can give high heat conductivity and high electric conductivity when used as filler and contains a low content of impurities with a lower cost.

The present invention has an object to provide a catalyst in which generation efficiency (weight gain) of the carbon fiber per catalyst mass is high and with which the carbon fiber having a low content of impurities can be produced with high efficiency, and to provide a carbon fiber which is excellent in filling performance and dispersibility in a resin and can give high electrical conductivity and high heat conductivity.

### Solution to Problem

As the result of keen researches by the inventors in order to achieve the above object, they have found out that by conducting a vapor phase growth reaction of carbon using a catalyst obtained by dissolving or dispersing [I] a compound containing Fe element; [II] a compound containing Co element; [III] a compound containing at least one element selected from the group consisting of Ti, V and Cr; and [IV] a compound containing at least one element selected from the group consisting of W and Mo in a solvent to obtain a solution or a fluid dispersion and impregnating a particulate carrier with the solution or the fluid dispersion, the generation efficiency (weight gain) of the carbon fiber per catalyst mass becomes high and the carbon fiber having small total content of metal elements as impurities can be obtained without conducting impurity removal treatment such as acid washing. They have also found out that the carbon fiber is excellent in filling performance and dispersibility in a resin and can give high electric conductivity and high heat conductivity. The present invention was completed as the result of further researches based on these findings.

That is, the present invention includes the following modes.
(1) A carbon fiber containing [I] Fe element; [II] Co element; [III] at least one element selected from the group consisting of Ti, V and Cr; and [IV] at least one element selected from the group consisting of W and Mo; and in which a graphite layer is approximately parallel with the fiber axis of the carbon fiber, the carbon fiber having a fiber diameter of 5 nm or more and 100 nm or less and being tubular.
(2) The carbon fiber described in (1), in which the total content of the metal elements is not more than 10 % by mass and the total content of the element [I], the element [II], the element [III] and the element [IV], excluding the metal elements derived from a carrier, among them is not more than 1.8 % by mass.
(3) The carbon fiber described in (1) or (2), wherein the fiber diameter is 5 nm or more and 70 nm or less.
(4) The carbon fiber described in any one of (1) to (3), in which R value in Raman spectroscopic analysis is 0.9 or less, wherein the R value is an intensity ratio ID/IG between peak intensity (ID) in the vicinity of 1360 cm⁻¹ and the peak intensity (IG) in the vicinity of 1580 cm⁻¹ as measured by Raman spectroscopic spectrum.
(5) The carbon fiber described in any one of (1) to (4), wherein the carbon fiber has been heat treated at 2000 to 3500 degrees cent. under an inactive gas atmosphere.
(6) A catalyst for production of a carbon fiber comprising [I] Fe element; [II] Co element; [III] at least one element selected from the group consisting of Ti, V and Cr; and [IV] at least one element selected from the group consisting of W and Mo.
(7) The catalyst for production of a carbon fiber described in (6), in which the element [I], the element [II], the element [III], and the element [IV] are supported on a particulate carrier, and the total amount of the element [I], the element [II], the element [III], and the element [IV], excluding the metal element derived from the carrier, is 1 to 200 % by mass with respect to the particulate carrier.
(8) The catalyst for production of a carbon fiber described in (7), in which the carrier is alumina, magnesia, titania, silica, calcium carbonate, calcium hydroxide or calcium oxide.
(9) A method of preparing a catalyst for production of a carbon fiber described in (7) or (8), comprising the steps of dissolving or dispersing [I] a compound containing Fe element; [II] a compound containing Co element; [III] a compound containing at least one element selected from the group consisting of Ti, V and Cr; and [IV] a compound containing at least one element selected from the group consisting of W and Mo in a solvent to obtain a solution or a fluid dispersion, and impregnating a particulate carrier with the solution or the fluid dispersion.
(10) A method for producing a carbon fiber comprising a step of bringing a carbon source into contact with the catalyst for production of a carbon fiber described in any one of (6) to (8) in a vapor phase at a temperature of more than 500 degrees cent. and not more than 1000 degrees cent.
(11) The method for producing a carbon fiber according to (9) or (10), further comprising a step of heat treatment of the carbon fiber at a temperature of 2000 to 3500 degrees cent. under an inactive gas atmosphere.
(12) A composite material comprising the carbon fiber described in any one of (1) to (5).

### Advantageous Effects of Invention

By decomposing a carbon source for vapor phase growth in the presence of the catalyst for production of a carbon fiber in the present invention, the generation efficiency (weight gain) of the carbon fiber per catalyst mass is raised, and moreover, a carbon fiber with less content of metal elements as impurities can be obtained inexpensively with a simple process.

The carbon fiber in the present invention can be uniformly dispersed when filled in metal, resin and ceramics, high heat conductivity and high electric conductivity can be given, and strength.deterioration of a composite material obtained by adding the carbon fiber in the metal, resin or ceramic is not caused. Moreover, the carbon fiber in the present invention is suitably used as an electron emitting material for FED (Field Emission Display), as a catalyst carrier for various reactions, moreover as a medium for storing hydrogen, methane or like various gases, or as an electrode material of an electrochemical element such as a battery, a capacitor or a hybrid capacitor.

### Brief Description of Drawings

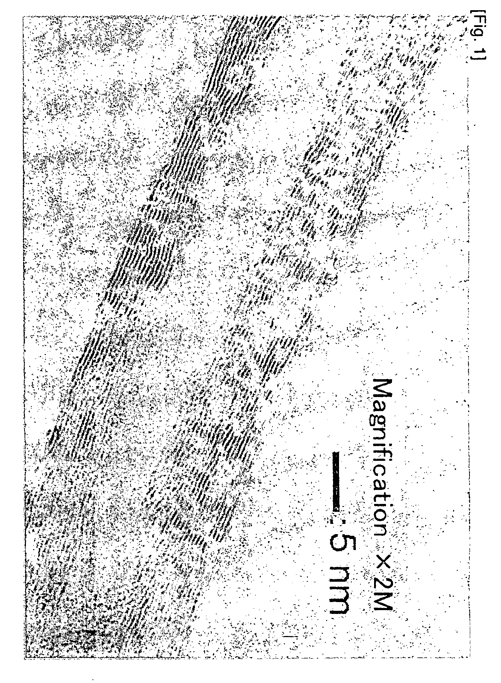

[fig.1]a view illustrating an image observed by transmission electron microscope of a product material obtained in Example 1.

### Description of Embodiments

The present invention will be described below in detail.

A carbon fiber in the present invention contains an element [I], an element [II], an element [III], and an element [IV]. The carbon fiber containing the four types of elements in combination can be uniformly dispersed when being filled in a resin and can give high heat conductivity and high electric conductivity. Also, it does not cause strength deterioration of a composite material obtained by adding the carbon fiber.

The element [I], the element [II], the element [III], and the element [IV] are elements derived from a catalytic metal used in production of the carbon fiber. If the catalytic metal is supported by the particulate carrier, the metal elements derived from the carrier might be contained in the carbon fiber. Some of the carriers contain the element [I], the element [II], the element [III], or the element [IV], but in the present invention, it is assumed to mean that the element [I], the element [II], the element [III], and the element [IV] are contained as elements derived from the catalytic metal excluding the elements derived from the carrier (specifically, substances supported by the carrier).

The element [I] is Fe, and the element [II] is Co.

The element [III] is a compound containing at least one element selected from the group consisting of Ti, V and Cr. Among the elements [III], at least one element selected from the group consisting of Ti and V is preferable, and V is particularly preferable.

The element [IV] is a compound containing at least one element selected from the group consisting of W and Mo.

Specific combinations of the element [I], the element [II], the element [III], and the element [IV] include Fe-Co-Ti-Mo, Fe-Co-V-Mo, Fe-Co-Cr-Mo, Fe-Co-Ti-W, Fe-Co-V-W, and Fe-Co-Cr-W.

The ratio of the element [I] and the element [II] in the carbon fiber is not particularly limited, but it is preferably 0.05 / 0.95 to 0.6 / 0.4 or particularly preferably 0.15/0.85 to 0.4 / 0.6 in molar ratio of the element [II] / the element [I].

A preferable content of the element [III] in the carbon fiber with respect to the total content of the element [I] and the element [II] is preferably 1 to 100 % by mol, more preferably 5 to 50 % by mol, or particularly preferably 5 to 20 % by mol.

The content of the element [IV] in the carbon fiber to the total content of the element [I] and the element [II] is preferably 1 to 100 % by mol, more preferably 5 to 50 % by mol, or particularly preferably 5 to 20 % by mol. If the each content of the element [I], the element [II], the element [III], and the element [IV] satisfies the above ranges, filling performance and dispersibility in the resin are excellent, and high electric conductivity and high heat conductivity can be given.

Moreover, the total content of the element [III] and the element [IV] with respect to the total content of the element [I] and the element [II] in the carbon fiber, excluding the metal element derived from the carrier, is preferably 30 % by mol or less.

Also, the total content of the element [I] and the element [II] to the carbon fiber is preferably 2 % by mass or less, more preferably 1.3 % by mass or less, still more preferably 0.8 % by mass or less, or particularly preferably 0.4 % by mass or less.

The content of the element [III] (excluding the metal element derived from the carrier) to the carbon fiber is preferably 0.4 % by mass or less, more preferably 0.25 % by mass or less, still more preferably 0.15 % by mass or less, or particularly preferably 0.08 % by mass or less.

The content of the element [IV] to the carbon fiber is preferably 0.4 % by mass or less, more preferably 0.25 % by mass or less, still more preferably 0.15 % by mass or less, or particularly preferably 0.08 % by mass or less.

The carbon fiber in the present invention may contain the metal elements derived from the carrier other than the above element [I], the element [II], the element [III], and the element [IV]. For example, they include Al derived from alumina,

Zr derived from zirconia, Ti derived from titania, Mg derived from magnesia, Ca derived from calcium carbonate, calcium oxide, calcium hydroxide, Si derived from silica, diatomite.

The metal elements derived from the carrier are contained preferably in 0.1 to 20 times, more preferably 0.1 to 10 times, or particularly preferably 0.1 to 5 times with respect to the total mass of the element [I], the element [II], the element [III] and the element [IV]. The content of the metal elements derived from the carrier in the carbon fiber is preferably 5 % by mass or less, more preferably 3 % by mass or less, still more preferably 2 % by mass or less, or particularly preferably 1 % by mass or less.

The carbon fiber in the present invention has the total metal element content preferably of 10 % by mass or less, more preferably of 5 % by mass or less, still more preferably of 3 % by mass or less, or particularly preferably of 2 % by mass or less. Here, the total metal element content is the total amount of the element [I], the element [II], the element [III] and the element [IV] derived from the catalytic metal and the metal element derived from the carrier.

The total content of the element [I], the element [II], the element [III] and the element [IV] derived from the catalytic metal in the carbon fiber is preferably 2.8 % by mass or less, more preferably 1.8 % by mass or less, still more preferably 1.1 % by mass or less, or particularly preferably 0.6 % by mass or less, excluding the metal element derived from the carrier.

The contents of these metal elements in the carbon fiber can be determined by measuring the solution obtained by sulfuric nitric acid - decomposition of the carbon fiber using ICP-AES (Inductively Coupled Plasma - Atomic Emission Spectrometry).

Since the carbon fiber in the present invention has a low impurity content and excellent dispersibility when being filled in a resin, heat conductivity and electric conductivity can be drastically improved. Also, deterioration of mechanical strength of the resin can be restrained even if the carbon fiber in the present invention is added in a large quantity.

The carbon fiber in the present invention is preferably not more than 0.9, or more preferably not more than 0.7 in R value in Raman spectroscopic analysis.

The R value is an intensity ratio I_{D}/I_{G} between peak intensity (I_{D}) in the vicinity of 1360 cm⁻¹ and the peak intensity (I_{G}) in the vicinity of 1580 cm⁻¹ as measured by Raman spectroscopic spectrum. The R value was determined under a condition of excitation wavelength of 532 nm using Series 5000 made by Kaiser Optical Systems. Inc. The smaller R value indicates the larger a growth level of the graphite layer in the carbon fiber. If the R value satisfies the above range, the heat conductivity and electric conductivity of the resin can be raised when the fiber is added to the resin.

The carbon fiber in the present invention has a fiber diameter of 5 nm or more and 100 nm or less, more preferably 5 nm or more and 70 nm or less, or particularly preferably 5 nm or more and 50 nm or less. Its aspect ratio is preferably 5 to 1000.

In the carbon fiber in the present invention, the graphite layer extends approximately in parallel with the fiber axis. The term "approximately parallel" in the present invention means that an inclination angle of the graphite layer to the fiber axis is within a range of approximately plus or minus 15 degrees.

A length of the graphite layer is preferably 15 times or less as long as the fiber diameter. The shorter the length of the graphite layer is, the higher the contact strength between the carbon fiber and the resin becomes when being filled in the resin, and the mechanical strength of a composite of the resin and the carbon fiber becomes higher. The length of the graphite layer and the inclination angle of the graphite layer can be determined by observation using an electronic microscope photograph.

Also, the preferred embodiment of the carbon fiber is tubular having a hollow at the center part of the fiber. The hollow part may be continuous in the fiber longitudinal direction or may be discontinuous. A ratio (do / d) between a fiber diameter d and a hollow inner diameter d₀ is not particularly limited but it is preferably 0.1 to 0.8, or more preferably 0.1 to 0.6.

The tube-like carbon fiber in the present invention preferably has a shell with a multilayer structure surrounding the hollow. For example, it includes those with an inner layer of the shell composed of a crystalline carbon and an outer layer of the shell composed of a carbon containing a thermal decomposition layer; and those with a portion where the graphite layers are arrayed regularly in parallel and a portion where the graphite layers are arrayed irregularly at random.

The former carbon fiber with the shell inner layer composed of the crystalline carbon and the shell outer layer composed of the carbon containing the thermal decomposition layer has a higher contact strength between the carbon fiber and the resin when being filled in the resin, and the mechanical strength of the composite of the resin and the carbon fiber becomes higher.

With the carbon fiber with the portion where the graphite layers are arrayed regularly in parallel and the portion where the graphite layers are arrayed irregularly at random, if the layer made up of the irregular carbon atom array is thick, fiber strength might easily become weak, while if the layer made up of the irregular carbon atom array is thin, interface strength with the resin might easily become weak. In order to enhance the fiber strength and the interface strength with the resin, it is preferable that the layer made up of the irregular carbon atom array (irregular graphite layer) is present with an appropriate thickness or that a thick irregular graphite layer and a thin irregular graphite layer are mixed or distributed in a single fiber.

The carbon fiber in the present invention has its specific surface area preferably of 20 to 400 m²/g, more preferably of 30 to 350 m²/g, or particularly preferably 40 to 350 m² / g. The specific surface area can be determined by the BET method in nitrogen adsorption.

The carbon fiber in the present invention can be obtained by a producing method comprising a step of bringing the catalyst in the present invention into contact with the carbon source in a vapor phase as will be described below.

The catalyst for production of a carbon fiber in the present invention comprises the element [I], the element [II], the element [III] and the element [IV]. By comprising the four types of elements in combination, the generation efficiency (weight gain) of the carbon fiber per catalyst mass becomes high, and a carbon fiber with drastically reduced content of impurities can be obtained at a low cost. Some of the catalyst carriers contain the element [I], the element [II], the element [III] or the element [IV], but in the present invention, it is assumed to mean that the element [I], the element [II], the element [III] and the element [IV] are contained as elements derived from the catalytic metal excluding the metal elements derived from the catalyst carrier, specifically, substances supported by the carrier.

The element [I] is Fe, and the element [II] is Co. The element [III] is at least one element selected from the group consisting of Ti, V and Cr. From the viewpoint of the generation efficiency of the carbon fiber per catalyst mass, at least one element selected from the group consisting of Ti and V is preferable. And V is particularly preferable from the viewpoint of the generation efficiency. Since Cr includes a plurality of types with different oxidation numbers as divalent, trivalent and hexavalent, control of the oxidation number in catalyst preparation is required, and a catalyst preparation process might become complicated, but Cr gives higher generation efficiency when a calcium carbonate carrier is used. Ti is stable with the oxidation number of tetravalent, and the above-mentioned particular control is not needed and the catalyst performance is stable without using a complicated catalyst preparation method.

The element [IV] is at least one element selected from the group consisting of W and Mo.

The molar ratio of the element [I] and the element [II] composing the catalyst is not particularly limited, but it is preferably 0.05 / 0.95 to 0.6 / 0.4, or particularly preferably 0.15 / 0.85 to 0.4 / 0.6 in a molar ratio of the element [II] / the element [I].

The ratio of the element [III] composing the catalyst, excluding the metal element derived from the carrier, with respect to the total amount of the element [I] and the the element [III] is Ti, V or Cr (excluding the metal element derived from the carrier), the ratio of the element [III] with respect to the total amount of the element [I] and the element [II] is preferably 1 to 100 % by mol, more preferably 5 to 50 % by mol, or particularly preferably 5 to 20 % by mol.

The ratio of the element [IV] composing the catalyst with respect to the total amount of the element [I] and the element [II] is preferably 1 to 100 % by mol, more preferably 5 to 50 % by mol, or particularly preferably 5 to 20 % by mol.

If the ratios of the element [I], the element [II], the element [III] and the element [IV] satisfy the above ranges, the carbon fiber in the present invention with less total content of the metal elements can be obtained.

Moreover, the total amount of the element [III] and the element [IV], excluding the metal element derived from the carrier, with respect to the total amount of the element [I] and the element [II] is preferably 30 % by mol or less.

The catalyst for production of a carbon fiber in the present invention is preferably the element [I], the element [II], the element [III] and the element [IV] supported on the carrier.

It is only necessary that the carrier is stable in a heating temperature range, and inorganic oxides and inorganic carbonates are usually used. As the carrier, a particulate one is preferable. For example, alumina, zirconia, titania, magnesia, calcium carbonate, calcium hydroxide, calcium oxide, strontium oxide, barium oxide, zinc oxide, strontium carbonate, barium carbonate, silica, diatom earth or zeolite can be cited. Among them, from the viewpoint to lower the content of impurities, alumina, magnesia, titania, calcium carbonate, calcium hydroxide or calcium oxide is preferable. As alumina, intermediate alumina is preferably employed. Also, from the viewpoint to improve heat conductivity, a compound containing calcium such as calcium carbonate, calcium hydroxide or calcium oxide is preferable.

The total supported amount of the element [I], the element [II], the element [II] and the element [IV] with respect to the carrier are preferably 1 to 200 % by mass, more preferably 5 to 100 % by mass, or particularly preferably 5 to 70 % by mass. If the supported amount is too large, a manufacturing cost rises and the total content of the metal elements in the carbon fiber tends to be high.

The catalyst for production of a carbon fiber in the present invention is not particularly limited by its preparation method, but the catalyst is particularly preferably prepared by an impregnating method. The impregnating method is a method of impregnating the carrier with a liquid containing the catalytic metal element to obtain a catalyst.

Specifically, [I] a compound containing Fe element; [II] a compound containing Co element; [III] a compound containing at least one element selected from the group consisting of Ti, V and Cr; and [IV] a compound containing at least one element selected from the group consisting of W and Mo are dissolved or dispersed in a solvent to obtain a solution or a fluid dispersion, and a particulate carrier is impregnated with the solution or the fluid dispersion, and then it is dried so as to obtain the supported catalyst for production of a carbon fiber in the present invention.

The catalytic metal elements may be supported on the carrier by impregnating the carrier with a liquid containing all of the compound [I], the compound [II], the compound [III] and the compound [IV]; or may be conducted by impregnating the particulate carrier with a liquid containing the compound [I], a liquid containing the compound [II], a liquid containing the compound [III], and a liquid containing the compound [IV] in random order.

The liquid containing the catalytic metal elements may be a liquid organic compound containing the catalytic metal elements or may be a liquid which compounds containing the catalytic metal element are dissolved or dispersed in an organic solvent or water. In order to improve dispersibility of the catalytic metal element, a dispersing agent or surfactant (preferably cationic surfactant or anionic surfactant) may be added to the liquid containing the catalytic metal elements. A catalytic metal element concentration in the liquid containing the catalytic metal elements can be selected as appropriate according to the solvent and catalytic metal species. The amount of the liquid containing the catalytic metal elements to be mixed with the carrier preferably corresponds to a liquid absorbing amount of the carrier to be used.

The drying after the liquid containing the catalytic metal elements and the carrier are sufficiently mixed is preferably carried out at 70 to 150 degrees cent. Vacuum drying may be employed in the drying. Moreover, pulverization and classification are preferably performed after the drying in order to obtain an appropriate size.

The carbon source used in the producing method in the present invention is not particularly limited, but it includes an organic compound including alkanes such as methane, ethane, propane, butane, pentane, hexane, heptane and octane; alkenes such as butene, isobutene, butadiene, ethylene and propylene; alkynes such as acetylene; aromatic hydrocarbons such as benzene, toluene, xylene, styrene, naphthalene, anthracene, ethyl benzene and phenanthrene; alcohols such as methanol, ethanol, propanol and butanol; alicyclic hydrocarbons such as cyclopropane, cyclopentane, cyclohexane, cyclopentene, cyclohexene, cyclopentadiene and dicyclopenatdiene; cumene, formaldehyde, acetaldehyde, acetone; and carbon monoxide, carbon dioxide. They can be used alone or in combination of two or more, Thus, benzine and kerosene can also be employed as the carbon source. Among them, methane, ethane, ethylene, acetylene, benzene, toluene, methanol, ethanol, and carbon monoxide are preferable, and methane, ethane and ethylene are particularly preferable.

A method of bringing the catalyst and the carbon source into contact with each other in a vapor phase can be performed by the same manner as the conventional known vapor phase methods.

For example, there is a method in which the catalyst is set in a vertical-type or horizontal-type reactor heated to a predetermined temperature and the carbon source is fed with a carrier gas into the reactor.

The catalyst may be set in the fixed-bed reactor in which it is placed on a boat (a boat made of quartz, for example) in the reactor or may be set in a fluidized-bed reactor in which it is fluidized by the carrier gas in the reaction vessel. Since the catalyst metal might be in an oxidized state, the catalyst can be reduced by feeding a gas containing a reducing gas before the carbon source is fed. A temperature at the reduction is preferably 300 to 1000 degrees cent., or more preferably 500 to 700 degrees cent., and a reduction time is preferably 10 minutes to 5 hours, or more preferably 10 to 60 minutes.

As the carrier gas, a reducing gas such as a hydrogen gas is preferably used. The amount of the carrier gas can be selected as appropriate according to a reaction mode but it is preferably 0.1 to 70 parts by mol with respect to 1 part by mol of the carbon source. Other than the reducing gas, an inactive gas such as nitrogen gas, helium gas, argon gas and the like may be used at the same time. Also, the relative proportions of the gas may be changed during progress of the reaction. A reducing gas concentration is preferably not less than 1 % by volume, more preferably not less than 30 % by volume, or particularly preferably not less than 85 % by volume with respect to the entire carrier gas.

A reaction temperature in the vapor phase growth is preferably more than 500 degrees cent. and not more than 1000 degrees cent., or more preferably not less than 550 degrees cent. and not more than 750 degrees cent. Within this temperature range can easily produce a tube-like carbon fiber.

The carbon fiber obtained by the above method may be subject to heat treatment at 2000 to 3500 degrees cent. under an inactive gas atmosphere of helium or argon

The heat treatment may be performed at a high temperature of 2000 to 3500 degrees cent. from the beginning, or the temperature may be raised in step by step. The heat treatment in stepwise temperature rise is performed in a first stage of usually 800 to 1500 degrees cent. and in a second stage of usually 2000 to 3500 degrees cent.

Since the carbon fiber in the present invention has high electric conductivity and is excellent in dispersibility into matrix such as resin, metal or ceramics, by having the carbon fiber contained in the resin or the like a composite material having high electric conductivity or high heat conductivity can be obtained. Particularly if the carbon fiber is mixed in the resin to have a composite material, an excellent effect that the equivalent conductivity is shown with the added amount of the carbon fiber in the present invention being 1/2 to 1/3 by mass or less as that of a conventional carbon fiber is exerted. Specifically, in the resin - carbon fiber composite material used for application with antistatic properties and/or desired conductivity could not be obtained unless 5 to 15 % by mass of the conventional carbon fiber has been contained. On the other hand, by using the carbon fiber in the present invention, sufficient conductivity can be obtained by mixing of 0.1 to 8 % by mass. If it is mixed with metal, fracture strength can be improved.

The ceramics to which the carbon fiber in the present invention is added includes aluminum oxide, mullite, silicon oxide, zirconium oxide, silicon carbide or silicon nitride.

The metal to which the carbon fiber in the present invention is added includes gold, silver, aluminum, iron, magnesium, lead, copper, tungsten, titanium, niobium, hafnium as well as their alloys and mixtures.

As the resin to which the carbon fiber in the present invention is added, either of ther-moplastic resin and thermosetting resin can be employed. For further improvement of impact resistance, a resin in which thermoplastic elastomer or rubber component is added to the above thermoplastic resin can be employed.

The reason why the carbon fiber in the present invention shows excellent dispersibility to the matrix is not known, but it is assumed that the thermal decomposition of the carbon source is appropriately promoted in the vapor phase, and a thermal decomposition layer with'an appropriate thickness is formed on the surface of the fiber.

In a resin composition in which the carbon fiber in the present invention is dispersed, other various resin additives can be compounded within a range not impairing the performance and function of the resin composition. The resin additives include, for example, coloring agent, plasticizer, lubricant, heat stabilizer, light stabilizer, ultraviolet absorber, filler, foaming agent, flame retarder or a rust-preventive agent.

These various resin additives are preferably compounded in the final process when the resin composition is prepared.

When each component constituting the resin composition in which the carbon fiber in the present invention is dispersed is mixed and kneaded, fracture of the carbon fiber is preferably restrained as much as possible. Specifically, a fracture ratio of the carbon fiber is preferably kept at 20 % or less, more preferably at 15 % or less, or particularly preferably at 10 % or less. The fracture ratio is determined by comparing the aspect ratio of the carbon fiber before and after the mixing and kneading as measured by electronic microscope SEM observation, for example. In order to mix and knead while suppressing the fracture of the carbon fiber as much as possible, the following method can be used, for example.

In general, if inorganic filler is kneaded in the molten thermoplastic resin or thermosetting resin, high shear is applied to the aggregated inorganic filler so as to be unraveled and be dissected out, and to evenly disperse the inorganic filler in the molten resin. If the shear in kneading is weak, the inorganic filler is not sufficiently dispersed in the molten resin, and a resin composite material having expected performance and function can not be obtained. As a kneading machine capable of generating a high shearing force, those using a millstone mechanism or employing a kneading disk capable of applying high shear in a screw element of a same-direction twin-screw extruder is used in many cases. However, if the carbon fiber is kneaded in the resin, if excessively high shear is applied to the resin or carbon fiber, the carbon fiber might be fractured, and the resin composite material having expected performance and function can not be obtained. On the other hand, in the case of a single-screw extruder with weak shearing force, the fracture of the carbon fiber can be suppressed, but dispersion of the carbon fiber does not become even.

Therefore, in order to realize even dispersion while suppressing the fracture of the carbon fiber, kneading with reduced shear with the same-direction twin-screw extruder not using the kneading disk, kneading for a long time with a device such as a pressurized kneader which does not apply high shear or kneading with using a special mixing element in the single-screw extruder is preferable.

Also, in order to disperse the carbon fiber in the resin, wettability between the molten resin and the carbon fiber is important. By improving the wettability, an area corresponding to an interface between the molten resin and the carbon fiber is increased. As a method of increasing the wettability, there is a method of oxidation treatment of the surface on the carbon fiber, for example.

The carbon fiber in the present invention might easily suck in air, in filling to the resin. In this case, deaeration is difficult with a regular single-screw extruder or same-direction twin-screw extruder, and it might be difficult to fill the fiber in the resin. Thus, as a kneading machine with favorable filling performance and can restrain fracture of the carbon fiber as much as possible, a batch-type pressurized kneader is preferable. Those kneaded by the batch-type pressurized kneader can be inputted into a single-screw extruder before solidification to be made into a pellet. Other than that, as an extruder capable of deaeration of the carbon fiber containing much air and high filling of the carbon fiber, a reciprocally-moving single-screw extruder (Co-kneader made by Coperion Bus AG) can be used.

The composite material in the present invention can be suitably used as a molding material to obtain products and components requiring impact resistance as well as conductivity and antistatic properties such as components used in OA equipment and electronic equipment, conductive packaging components, components for antistatic packaging or automobile components. More specifically, the composite material in the present invention can be used for seamless belt being excellent in durability, heat resistance, surface smoothness as well as stable electric resistance properties used in a photoreceptor, charge belt, transfer belt or fixation belt in an image forming device such as an electronic photocopier or laser printer, a tray and a cassette bring excellent in heat resistance, antistatic properties for machining, washing, transfer, storage of a hard disk, hard disk head, or various semiconductor components in a manufacturing, transport, or storage process; and for an automobile components for electrostatic coating and a fuel tube for automobile. Since the carbon fiber in the present invention has extremely small metal impurities derived from the catalyst, if the hard disk, hard disk head, or various semiconductors are transported by the tray and the cassette manufactured using the composite material containing the carbon fiber, contamination on them caused by a metal ion becomes extremely rare.

When these products are to be manufactured, a known resin molding method can be used. The molding method includes injection molding, hollow molding, extrusion molding, sheet molding, thermoforming, rotational molding, laminated molding, and transfer molding.

Applications of the carbon fiber in the present invention can be extended to the aerospace field, sports field and industrial material field. In the aerospace field, aircraft primary structural materials such as main plane, rear plane and fuselage, aircraft secondary structural materials such as aileron, rudder and elevator; aircraft interior materials such as floor pane, beam, lavatory and seat; nozzle cone and motor case of a rocket; and antenna, solar battery panel, tube truss structural material of an artificial satellite can be mentioned. In the sports field, fishing rod, reel of fishing goods; shaft, head, face plate, shoes for golf; racket for tennis, badminton, squash; frame, wheel, handle of a bicycle; yacht, cruiser, boat, mast; baseball bat, ski, ski stock, bamboo sword of the Kendo, Japanese archery, archery, radio control car, table tennis, billiard and stick for ice hockey can be cited. In the industrial material field, propeller shaft of automobile, racing car, CNG tank, spoiler, bonnet; cowl, muffler cover of motorcycle; railway car, linear motor car, seat; fiber components, mechanical components such as plate spring, robot arm, bearing, gear, cam and bearing retainer; high-speed rotating body such as centrifugal separator rotor, uranium condensation cylinder, flywheel, industrial roller, and shaft; electronic and electric appliance component such as parabola antenna, acoustic speaker, VTR component, CD component, IC carrier and electronic device housing; electrode for electrochemical element such as battery (lithium ion battery), capacitor (electric double-layer capacitor, hybrid capacitor); blade and nacelle of wind power generation; pressure vessel such as hydraulic cylinder, canister; subsea oilfield excavator such as riser, tether; chemical device such as agitation blade, pipe, tank; medical equipment such as wheelchair, components for surgical operation, X-ray grid, cassette; civil engineering and construction material such as cable, concrete reinforcing material; office equipment such as bearing, cam, housing of printer; precision equipment such as camera component, plant component; anti-corrosion device such as pump component; and other materials such as conductive material, insulating material, sliding material, heat-resistant material, charge sheet, resin die, umbrella, helmet, planar heat generator, eyeglass frame and anti-corrosion filter can be cited.

Examples of the present invention will be illustrated below and the present invention will be described in more detail. They are mere illustrations for the sake of explanation, and the present invention is not limited by them at all.

Properties and the like were determined by the following methods.

### (Concentration of impurities)

The concentration of impurities was measured using a CCD multi-element simultaneous type ICP emission spectrophotometer (made by Varian Inc.: VISTA-PRO) at high-frequency output of 1200 W and measurement time of 5 seconds.

In a quartz beaker, 0.1 g of carbon fiber was precisely weighed and subjected to sulfuric nitric acid decomposition. After cooling, it was measured off in a volume of 50 ml. This solution was diluted as appropriate, and each element was quantified by ICP-AES (Atomic Emission Spectrometer). Mass ratio of the impurities to the mass of the carbon fiber is shown in Table. The impurities includes the catalyst carrier, the element [I], the element [II], the element [III], and the element [IV] derived from the catalytic metal.

The "other than carbon element" refers to the total content of the metal elements, the "elements (I) (II) (III) (IV)" refer to the total content of the element [I], the element [II], the element [III] and the element [IV] derived from the catalytic metal, and the "carrier" refers to the content of the metal element derived from the catalyst carrier.

### (Weight gain)

This is represented by a ratio of the mass of the generated carbon fiber to the mass of the used catalyst (mass of carbon fiber / mass of catalyst).

### Example 1 (Fe (70) - Co (30) - Ti (10) - Mo (10) / alumina)

In 0.95 part by mass of methanol, 1.25 parts by mass of iron (III) nitrate nonahydrate and 0.38 part by mass of cobalt (II) nitrate hexahydrate were added and dissolved, and then 0.11 part by mass of titanium (IV) tetra-n-butoxide tetramer and 0.08 part by mass of hexaammonium heptamolybdate tetrahydrate were added and dissolved so as to obtain a solution A.

The solution A was dripped and mixed with 1 part by mass of intermediate alumina (made by Sumitomo Chemical Co., Ltd.; AKP-G015). After the mixing, it was vacuum-dried at 100 degrees cent. for 4 hours. After the drying, it was crushed in a mortar and pestle so as to obtain a catalyst. In the catalyst, the molar ratio of Co / Fe was 0.3 / 0.7, the content of Mo was 10 % by mol and the content of Ti was 10 % by mol with respect to the total amount of Fe and Co, and the total supported amount of Fe and Co with respect to the intermediate alumina was 25 % by mass.

The weighed catalyst was placed on a quartz boat, and the quartz boat was put in a tubular reactor made by quartz and the reactor was sealed. Inside the reactor was replaced by nitrogen gas, and while the nitrogen gas was made to flow, the temperature of the reactor was raised from the room temperature to 690 degrees cent. for 60 minutes. The temperature of 690 degrees cent. was maintained for 30 minutes while the nitrogen gas was made to flow.

While the temperature of 690 degrees cent. was maintained, the nitrogen gas was switched to a mixed gas A of nitrogen gas (100 parts by volume) and hydrogen gas (400 parts by volume), and the mixed gas A was made to flow through the reactor for 30 minutes to conduct reduction reaction. After the reduction reaction, while the temperature of 690 degrees cent. was maintained, the mixed gas A was switched to a mixed gas B of hydrogen gas (250 parts by volume) and ethylene gas (250 parts by volume), and the mixed gas B was made to flow through the reactor for 60 minutes to conduct vapor phase growth reaction. The mixed gas B was switched to nitrogen gas, the inside of the reactor was replaced by the nitrogen gas, and the temperature was decreased to the room temperature. The reactor was opened, and the quartz boat was taken out. An image observed by a transmission electron microscope of the product material obtained in Example 1 is shown in Fig. 1. The carbon fiber was tubular, the graphite layer was approximately parallel with the carbon fiber axis, and its shell was in a multi-walled structure. The evaluation result of the carbon fiber is shown in Table 1. The relative proportions of the metal elements contained in the carbon fiber were the same as those of the catalyst.

### Example 2 (Fe (90) - Co (10) - V (10) - Mo (10) / almina)

In 0.95 part by mass of methanol, 1.62 parts by mass of iron (III) nitrate nonahydrate and 0.13 part by mass of cobalt (II) nitrate hexahydrate were added and dissolved, and then 0.05 part by mass of ammonium metavanadate and 0.08 part by mass of hexaammonium heptamolybdate tetrahydrate were added and dissolved so as to obtain a solution B.

The solution B was dripped and mixed with 1 part by mass of intermediate alumina (Sumitomo Chemical Co., Ltd.; AKP-G015). After the mixing, it was vacuum-dried at 100 degrees cent. for 4 hours. After the drying, it was crushed in a mortar and pestle so as to obtain a catalyst. In the catalyst, the molar ratio of Co / Fe was 0.1 / 0.9, the content of Mo was 10 % by mol and the content of V was 10 % by mol with respect to the total amount of Fe and Co, and the total supported amount of Fe and Co with respect to the intermediate alumina was 25 % by mass.

Using the catalyst, a carbon fiber was obtained by the same manner as in the Example 1. An image observed by a transmission electron microscope of the carbon fiber obtained in Example 2 is similar to in Fig. 1. The carbon fiber was tubular, the graphite layer was approximately parallel with the carbon fiber axis, and its shell was in a multi-walled structure. The evaluation result is shown in Table 1. The relative proportions of the metal elements contained in the carbon fiber was the same as those of the catalyst.

### Example 3 (Fe (70) - Co (30) - V (10) - Mo (10) / alumina)

In 0.95 part by mass of methanol, 1.25 parts by mass of iron (III) nitrate nonahydrate and 0.38 part by mass of cobalt (II) nitrate hexahydrate were added and dissolved, and then 0.05 part by mass of ammonium metavanadate and 0.08 part by mass of hexaammonium heptamolybdate tetrahydrate were added and dissolved so as to obtain a solution C.

The solution C was dripped and mixed with 1 part by mass of intermediate alumina (Sumitomo Chemical Co., Ltd.; AKP-G015). After the mixing, it was vacuum-dried at 100 degrees cent. for 4 hours. After the drying, it was crushed in a mortar and pestle so as to obtain a catalyst. In the catalyst, the molar ratio of Co / Fe-was 0.3 / 0.7, the content of Mo was 10 % by mol and the content of V was 10 % by mol with respect to the total amount of Fe and Co, and the total supported amount of Fe and Co with respect to the intermediate alumina was 25 % by mass.

Using the catalyst, a carbon fiber was obtained by the same manner as in the Example 1. An image observed by a transmission electron microscope of the carbon fiber obtained in Example 3 is similar to in Fig. 1. The carbon fiber was tubular, the graphite layer was approximately parallel with the carbon fiber axis, and its shell was in a multi-walled structure. The evaluation result is shown in Table 1. The relative proportions of the metal elements contained in the carbon fiber were the same as those of the catalyst.

### Example 4 (Fe (50) - Co (50) - V (10) - Mo (10) / alumina)

In 0.95 part by mass of methanol, 1.88 parts by mass of iron (III) nitrate nonahydrate and 0.63 part by mass of cobalt (II) nitrate hexahydrate were added and dissolved, and then 0.05 part by mass of ammonium metavanadate and 0.08 part by mass of hexaammonium heptamolybdate tetrahydrate were added and dissolved so as to obtain a solution D.

The solution D was dripped and mixed with 1 part by mass of intermediate alumina (Sumitomo Chemical Co., Ltd.; AKP-G015). After the mixing, it was vacuum-dried at 100 degrees cent. for 4 hours. After the drying, it was crushed in a mortar and pestle so as to obtain a catalyst. In the catalyst, the molar ratio of Co / Fe was 0.5 / 0.5, the content of Mo was 10 % by mol and the content of V was 10 % by mol with respect to the total amount of Fe and Co, and the total supported amount of Fe and Co with respect to the intermediate alumina was 25 % by mass.

Using the catalyst, a carbon fiber was obtained by the same manner as in the Example 1. An image observed by a transmission electron microscope of the carbon fiber obtained in Example 4 is similar to in Fig. 1. The carbon fiber was tubular, the graphite layer was approximately parallel with the carbon fiber axis, and its shell was in a multi-walled structure. The evaluation result is shown in Table 1. The relative proportions of the metal elements contained in the carbon fiber was the same as those of the catalyst.

### Example 5 (Fe (70) - Co (30) - Cr (10) - Mo (10) / alumina)

In 0.95 part by mass of methanol, 1.25 parts by mass of iron (III) nitrate nonahydrate and 0.38 part by mass of cobalt (II) nitrate hexahydrate were added and dissolved, and then 0.18 part by mass of chromium (III) nitrate nonahydrate and 0.08 part by mass of hexaammonium heptamolybdate tetrahydrate were added and dissolved so as to obtain a solution E.

The solution E was dripped and mixed with 1 part by mass of intermediate alumina (Sumitomo Chemical Co., Ltd.; AKP-G015). After the mixing, it was vacuum-dried at 100 degrees cent. for 4 hours. After the drying, it was crushed in a mortar and pestle so as to obtain a catalyst. In the catalyst, the molar ratio of Co / Fe was 0.3/0.7, the content of Mo was 10 % by mol and the content of Cr was 10 % by mol with respect to the total amount of Fe and Co, and the total supported amount of Fe and Co with respect to the intermediate alumina was 25 % by mass.

Using the catalyst, a carbon fiber was obtained by the same manner as in the Example 2. An image observed by a transmission electron microscope of the carbon fiber obtained in Example 5 is similar to in Fig. 1. The carbon fiber was tubular, the graphite layer was approximately parallel with the carbon fiber axis, and its shell was in a multi-walled structure. The evaluation result is shown in Table 1. The relative proportions of the metal elements contained in the carbon fiber was the same as those of the catalyst.

Example 6 (Fe (70) - Co (30) - Mn (50) - Mo (10) / alumina) (for reference) In 0.95 part by mass of methanol, 1.25 parts by mass of iron (III) nitrate nonahydrate and 0.38 part by mass of cobalt (II) nitrate hexahydrate were added and dissolved, and then 0.63 part by mass of manganese (II) nitrate hexahydrate and 0.08 part by mass of hexaammonium heptamolybdate tetrahydrate were added and dissolved so as to obtain a solution F.

The solution F was dripped and mixed with 1 part by mass of intermediate alumina (Sumitomo Chemical Co., Ltd.; AKP-G015). After the mixing, it was vacuum-dried at 100 degrees cent. for 4 hours. After the drying, it was crushed in a mortar and pestle so as to obtain a catalyst. In the catalyst, the molar ratio of Co / Fe was 0.3/0.7, the content of Mo was 10 % by mol and the content of Mn was 50 % by mol with respect to the total amount of Fe and Co, and the total supported amount of Fe and Co with respect to the intermediate alumina was 25 % by mass.

Using the catalyst, a carbon fiber was obtained by the same manner as in the Example 2. An image observed by a transmission electron microscope of the carbon fiber obtained in Example 6 is similar to in Fig. 1. The carbon fiber was tubular, the graphite layer was approximately parallel with the carbon fiber axis, and its shell was in a multi-walled structure. The evaluation result is shown in Table 1. The relative pro-portions of the metal elements contained in the carbon fiber was the same as those of the catalyst.

### Comparative Example 1 (Fe (70) - Co (30) - Mo (10) / alumina)

A catalyst was obtained by the same manner as in the Example 1, except that titanium (IV) tetra-n-butoxide tetramer was not used. In the catalyst, the molar ratio of Co / Fe was 0.3/0.7, the content of Mo was 10 % by mol with respect to the total amount of Fe and Co, and the total supported amount of Fe and Co with respect to the intermediate alumina (Sumitomo Chemical Co., Ltd.; AKP-G015) was 25 % by mass. Using the catalyst, a carbon fiber was obtained by the same manner as in the Example 1. The evaluation result is shown in Table 1. [Table 1]

**Table 1**

| | Example | | | | | | Comp. Ex. |
|---|---|---|---|---|---|---|---|
| | 1 | 2 | 3 | 4 | 5 | 6 (ref.) | 1 |
| Element [I] | Fe | Fe | Fe | Fe | Fe | Fe | Fe |
| Element [II] | Co | Cc | Co | Co | Co | Co | Co |
| Element [III] | Ti | V | V | V | Cr | Mn | - |
| Element [IV] | Mo | Mc | Mo | Mo | Mo | Mo | Mo |
| Carrier | Alumina | Alu-mina | Alu-mina | Alu-mina | Alu-mina | Alu-mina | Alu-mina |
| Weight gain (times) | 42 | 59 | 66 | 56 | 45 | 28 | 22 |
| Impurity concentration (%) | | | | | | | |
| Other than carbon element | 1.2 | 0.9 | 0.8 | 0.9 | 1.1 | 2.0 | 2.2 |
| Elements [I] [II] [III] [IV] | 0.4 | 0.9 | 0.3 | 0.3 | 0.4 | 0.9 | 0.8 |
| Carrier | 0.8 | 0.5 | 0.5 | 0.6 | 0.7 | 1.1 | 1.4 |

As shown in Table 1, as compared with the carbon fiber obtained using the three-component catalyst composed of the combination of Fe, Co and Mo supported on the alumina carrier (Comparative Example 1), the carbon fiber obtained using the four-component catalyst composed of Fe which is the element [I], Co which is the element [II] Ti, V or Cr which is the element [III], and Mo which is the element [IV] supported on the alumina carrier (Examples 1 to 6) had lower impurity concentration. The carbon fiber obtained in Examples 1 to 6 were 10 to 30 nm in the fiber diameter, 0.04 to 12 times as long as the fiber diameter in the length of the graphite layer, and approximately 70 % in the numerical ration of the graphite layer being less than twice as long as the fiber diameter.

### Example 7 (Fe (70) - Co (30) - Ti (10) - W (10) / alumina)

A catalyst was obtained by the same manner as in the Example 1, except that 0.11 part by mass of ammonium metatungstate was used instead of hexaammonium heptamolybdate tetrahydrate. In the catalyst, the molar ratio of Co / Fe was 0.3 / 0.7, the content of W was 10 % by mol and the content of Ti was 10 % by mol with respect to the total amount of Fe and Co, and the total supported amount of Fe and Co with respect to the intermediate alumina was 25 % by mass.

Using the catalyst, a carbon fiber was obtained by the same manner as in the Example 1. An image observed by a transmission electron microscope of the carbon fiber obtained in Example 7 is similar to in Fig. 1. The carbon fiber was tubular, the graphite layer was approximately parallel with the carbon fiber axis, and its shell was in a multi-walled structure. The evaluation result is shown in Table 2. The relative proportions of the metal elements contained in the carbon fiber were the same as those of the catalyst.

### Example 8 (Fe (70) - Co (30) - V (10) - W (10) / alumina)

A catalyst was obtained by the same manner as in the Example 3, except that 0.11 part by mass of ammonium metatungstate was used instead of hexaammonium heptamolybdate tetrahydrate. In the catalyst, the molar ratio of Co / Fe was 0.3 / 0.7, the content of W was 10 % by mol and the content of V was 10 % by mol with respect to the total amount of Fe and Co, and the total supported amount of Fe and Co with respect to the intermediate alumina was 25 % by mass.

Using the catalyst, a carbon fiber was obtained by the same manner as in the Example 3. An image observed by a transmission electron microscope of the carbon fiber obtained in Example 8 is similar to in Fig. 1. The carbon fiber was tubular, the graphite layer was approximately parallel with the carbon fiber axis, and its shell was in a multi-walled structure. The evaluation result is shown in Table 2. The relative proportions of the metal elements contained in the carbon fiber were the same as those of the catalyst.

### Example 9 (Fe (70) - Co (30) - Cr (10) - W (10) / alumina)

A catalyst was obtained by the same manner as in the Example 5, except that 0.11 part by mass of ammonium metatungstate was used instead of hexaammonium heptamolybdate tetrahydrate. In the catalyst, the molar ratio of Co / Fe was 0.3 / 0.7, the content of W was 10 % by mol and the content of Cr was 10 % by mol with respect to the total amount of Fe and Co, and the total supported amount of Fe and Co with respect to the intermediate alumina was 25 % by mass.

Using the catalyst, a carbon fiber was obtained by the same manner as in the Example 5. An image observed by a transmission electron microscope of the carbon fiber obtained in Example 9 is similar to in Fig. 1. The carbon fiber was tubular, the graphite layer was approximately parallel with the carbon fiber axis, and its shell was in a multi-walled structure. The evaluation result is shown in Table 2. The relative proportions of the metal elements contained in the carbon fiber were the same as those of the catalyst.

### Example 10 (Fe (70) - Co (30) - Mn (50) - W (10) / alumina) (for reference)

A catalyst was obtained by the same manner as in the Example 6, except that 0.11 part by mass of ammonium metatungstate was used instead of hexaammonium heptamolybdate tetrahydrate. In the catalyst, the molar ratio of Co / Fe was 0.3 / 0.7, the content of W was 10 % by mol and the content of Mn was 50 % by mol with respect to the total amount of Fe and Co, and the total supported amount of Fe and Co with respect to the intermediate alumina was 25 % by mass.

Using the catalyst, a carbon fiber was obtained by the same manner as in the Example 6. An image observed by a transmission electron microscope of the carbon fiber obtained in Example 10 is similar to in Fig. 1. The carbon fiber was tubular, the graphite layer was approximately parallel with the carbon fiber axis, and its shell was in a multi-walled structure. The evaluation result is shown in Table 2. The relative proportions of the metal elements contained in the carbon fiber were the same as those of the catalyst.

### Comparative Example 2 (Fe (70) - Co (30) - W (10) / alumina)

A catalyst was obtained by the same manner as in the Example 7, except that titanium (IV) tetra-n-butoxide tetramer was not used. In the catalyst, the molar ratio of Co / Fe was 0.3 / 0.7, the content of W was 10 % by mol with respect to the total amount of Fe and Co, and the total supported amount of Fe and Co with respect to the intermediate alumina (Sumitomo Chemical Co., Ltd.; AKP-G015) was 25 % by mass.

A carbon fiber was obtained using the catalyst by the same manner as in the Example 1. The evaluation result is shown in Table 2. [Table 2]

**Table 2**

| | Example | | | | Comp. Ex. |
|---|---|---|---|---|---|
| | 7 | 8 | 9 | 10 (ref.) | 2 |
| Element [I] | Fe | Fe | Fe | Fe | Fe |
| Element [II] | Co | Co | Co | Co | Co |
| Element [III] | Ti | V | Cr | Mn | - |
| Element [IV] | W | W | W | W | W |
| Carrier | Alu-mina | Alu-mina | Alu-mina | Alu-mina | Alu-mina |
| Weight gain (times) | 26 | 45 | 24 | 22 | 19 |
| Impurity concentration (%) | | | | | |
| Other than carbon element | 2.0 | 1.2 | 2.2 | 2.6 | 2.7 |
| Elements [I] [II] [III] [IV] | 0.8 | 0.5 | 0.9 | 1.2 | 1.0 |
| Carrier | 1.2 | 0.7 | 1.3 | 1.4 | 1.7 |

As shown in Table 2, as compared with the carbon fiber obtained using the three-component catalyst composed of the combination of Fe, W and Co supported on the alumina carrier (Comparative Example 2), the carbon fiber obtained using the four-component catalyst composed of Fe which is the element [I], Co which is the element [II] Ti, V or Cr which is the element [III], and Mo which is the element [IV] supported on the alumina carrier (Examples 7 to 10) had lower impurity concentration. The carbon fiber obtained in Examples 7 to 10 were 10 to 30 nm in the fiber diameter, 0.04 to 12 times as long as the fiber diameter in the length of the graphite layer, and approximately 70 % in the numerical ration of the graphite layer being less than twice as long as the fiber diameter.

### Comparative Example 3 (Fe (70) - Co (30) - Ti (10) / alumina)

A catalyst was obtained by the same manner as in the Example 1, except that hexaammonium heptamolybdate tetrahydrate was not used. In the catalyst, the molar ratio of Co / Fe was 0.3 / 0.7, the content of Ti was 10 % by mol with respect to the total amount of Fe and Co, and the total supported amount of Fe and Co with respect to the intermediate alumina (Sumitomo Chemical Co., Ltd.; AKP-G015) was 25 % by mass. A carbon fiber was obtained using the catalyst by the same manner as in the Example 1. The evaluation result is shown in Table 3.

### Comparative Example 4 (Fe (70) - Co (30) - V (10) / alumina)

A catalyst was obtained by the same manner as in the Example 3, except that hexaammonium heptamolybdate tetrahydrate was not used. In the catalyst, the molar ratio of Co / Fe was 0.3 / 0.7, the content of V was 10 % by mol with respect to the total amount of Fe and Co, and the total supported amount of Fe and Co with respect to the intermediate alumina (Sumitomo Chemical Co., Ltd.; AKP-G015) was 25 % by mass.

A carbon fiber was obtained using the catalyst by the same manner as in the Example 3. The evaluation result is shown in Table 3.

### Comparative Example 5 (Fe (70) - Co (30) - Cr (10) / alumina)

A catalyst was obtained by the same manner as in the Example 5, except that hexaammonium heptamolybdate tetrahydrate was not used. In the catalyst, the molar ratio of Co / Fe was 0.3 / 0.7, the content of Cr was 10 % by mol with respect to the total amount of Fe and Co, and the total supported amount of Fe and Co with respect to the intermediate alumina (Sumitomo Chemical Co., Ltd.; AKP-G015) was 25 % by mass.

A carbon fiber was obtained using the catalyst by the same manner as in the Example 5. The evaluation result is shown in Table 3.

### Comparative Example 6 (Fe (70) - Co (30) - Mn (50) / alumina)

A catalyst was obtained by the same manner as in the Example 6, except that hexaammonium heptamolybdate tetrahydrate was not used. In the catalyst, the molar ratio of Co / Fe was 0.3 / 0.7, the content of Mn was 50 % by mol with respect to the total amount of Fe and Co, and the total supported amount of Fe and Co with respect to the intermediate alumina (Sumitomo Chemical Co., Ltd.; AKP-G015) was 25 % by mass.

A carbon fiber was obtained using the catalyst by the same manner as in the Example 6. The evaluation result is shown in Table 3.

### Comparative Example 7 (Fe (70) - Co (30) / alumina)

A catalyst was obtained by the same manner as in the Example 1, except that titanium (IV) tetra-n-butoxide tetramer and hexaammonium heptamolybdate tetrahydrate were not used. In the catalyst, the molar ratio of Co / Fe was 0.3 / 0.7, and the total supported amount of Fe and Co with respect to the intermediate alumina (Sumitomo Chemical Co., Ltd.; AKP-G015) was 25 % by mass.

A carbon fiber was obtained using the catalyst by the same manner as in the Example 1. The evaluation result is shown in Table 3. [Table 3]

**Table 3**

| | Comparative Example | | | | |
|---|---|---|---|---|---|
| | 3 | 4 | 5 | 6 | 7 |
| Element [I] | Fe | Fe | Fe | Fe | Fe |
| Element [II] | Co | Co | Co | Co | Co |
| Element [III] | Ti | V | Cr | Mn | - |
| Element [IV] | - | - | - | - | - |
| Carrier | Alu-mina | Alu-mina | Alu-mina | Alu-mina | Alu-mina |
| Weight gain (times) | 20 | 33 | 18 | 18 | 14 |
| Impurity concentration (%) | | | | | |
| Other than carbon element | 2.4 | 1.5 | 2.7 | 3.0 | 3.4 |
| Elements [I] [II] [III] [IV] | 0.8 | 0.5 | 0.9 | 1.2 | 1.1 |
| Carrier | 1.6 | 1.0 | 1.8 | 1.8 | 2.3 |

From the result shown in Table 3, as compared with the carbon fiber obtained using the two-component catalyst composed of Fe and Co as its main components or the three-component catalyst shown in Table 3 supported on the alumina carrier, the carbon fiber obtained using the four-component catalyst composed of Fe and Co as its main components supported on the alumina carrier in the present invention had drastically less impurity concentration. It is known, for example, by comparing Example 3 and Comparative Example 1 and Comparative Example 4, or Example 8 and Comparative Example 2 as well as Comparative Example 4.

### Example 11 (Fe (70) - Co (30) - Ti (10) - Mo (10) / calcium carbonate)

A catalyst was obtained by the same manner as in the Example 1, except that calcium carbonate (Ube Material Industries, Ltd.; CS 3N-A30) was used instead of intermediate alumina. In the catalyst, the molar ratio of Co / Fe was 0.3/0.7, the content of Mo was 10 % by mol and the content of Ti was 10 % by mol with respect to the total amount of Fe and Co, and the total supported amount of Fe and Co with respect to the calcium carbonate was 25 % by mass.

Using the catalyst, a carbon fiber was obtained by the same manner as in the Example 1. An image observed by a transmission electron microscope of the carbon fiber obtained in Example 11 is similar to in Fig. 1. The carbon fiber was tubular, the graphite layer was approximately parallel with the carbon fiber axis, and its shell was in a multi-walled structure. The evaluation result is shown in Table 4. The relative proportions of the metal elements contained in the carbon fiber were the same as those of the catalyst.

### Example 12 (Fe (70) - Co (30) - V (10) - Mo (10) / calcium carbonate)

A catalyst was obtained by the same manner as in the Example 3, except that calcium carbonate (Ube Material Industries, Ltd.; CS 3N-A30) was used instead of intermediate alumina. In the catalyst, the molar ratio of Co / Fe was 0.3/0.7, the content of Mo was 10 & by mol and the content of V was 10 % by mol with respect to the total amount of Fe and Co, and the total supported amount of Fe and Co with respect to the calcium carbonate was 25 % by mass.

Using the catalyst, a carbon fiber was obtained by the same manner as in the Example 3. An image observed by a transmission electron microscope of the carbon fiber obtained in Example 12 is similar to in Fig. 1. The carbon fiber was tubular, the graphite layer was approximately parallel with the carbon fiber axis, and its shell was in a multi-walled structure. The evaluation result is shown in Table 4. The relative proportions of the metal elements contained in the carbon fiber were the same as those of the catalyst.

### Example 13 (Fe (70) - Co (30) - Cr (10) - Mo (10) / calcium carbonate)

A catalyst was obtained by the same manner as in the Example 5, except that calcium carbonate (Ube Material Industries, Ltd.; CS 3N-A30) was used instead of intermediate alumina. In the catalyst, the molar ratio of Co/ Fe was 0.3 / 0.7, the content of Mo was 10 % by mol and the content of Cr was 10 % by mol with respect to the total amount of Fe and Co, and the total supported amount of Fe and Co with respect to the calcium carbonate was 25 % by mass.

Using the catalyst, a carbon fiber was obtained by the same manner as in the Example 5. An image observed by a transmission electron microscope of the carbon fiber obtained in Example 13 is similar to in Fig. 1. The carbon fiber was tubular, the graphite layer was approximately parallel with the carbon fiber axis, and its shell was in a multi-walled structure. The evaluation result is shown in Table 4. The relative proportions of the metal elements contained in the carbon fiber were the same as those of the catalyst.

### Example 14 (Fe (70) - Co (30) - Mn (50) - Mo (10) / calcium carbonate) (for reference)

A catalyst was obtained by the same manner as in the Example 6, except that calcium carbonate (Ube Material Industries, Ltd.; CS 3N-A30) was used instead of intermediate alumina. In the catalyst, the molar ratio of Co / Fe was 0.3 / 0.7, and the content of Mo was 10 % by mol and the content of Mn was 50 % by mol with respect to the total amount of Fe and Co, and the total supported amount of Fe and Co with respect to the calcium carbonate was 25 % by mass.

Using the catalyst, a carbon fiber was obtained by the same manner as in the Example 6. An image observed by a transmission electron microscope of the carbon fiber obtained in Example 14 is similar to in Fig. 1. The carbon fiber was tubular, the graphite layer was approximately parallel with the carbon fiber axis, and its shell was in a multi-walled structure. The evaluation result is shown in Table 4. The relative proportions of the metal elements contained in the carbon fiber were the same as those of the catalyst.

### Comparative Example 8 (Fe (70) - Co (30) - Mo (10) / calcium carbonate)

A catalyst was obtained by the same manner as in the Example 11, except that titanium (IV) tetra-n-butoxide tetramer was not used. In the catalyst, the molar ratio of Co/Fe was 0.3/0.7, the content of Mo was 10 % by mol with respect to the total amount of Fe and Co, and the total supported amount of Fe and Co with respect to the calcium carbonate was 25 % by mass.

Using the catalyst, a carbon fiber was obtained by the same manner as in the Example 11. The evaluation result is shown in Table 4. [Table 4]

**Table 4**

| | Example | | | | Comp. Ex. |
|---|---|---|---|---|---|
| | 11 | 12 | 13 | 14 (ref.) | 8 |
| Element [I] | Fe | Fe | Fe | Fe | Fe |
| Element [II] | Co | Co | Co | Co | Co |
| Element [III] | Ti | V | Cr | Mn | - |
| Element [IV] | Mo | Mo | Mo | Mo | Mo |
| Carrier | CaCO₃ | CaCO₃ | CaCO₃ | CaCO₃ | CaCO₃ |
| Weight gain (times) | 26 | 30 | 38 | 21 | 18 |
| Impurity concentration (%) | | | | | |
| Other than carbon element | 1.8 | 1.6 | 1.3 | 2.5 | 2.6 |
| Elements [I] [II] [III] [IV] | 0.8 | 0.7 | 0.6 | 1.2 | 1.1 |
| Carrier | 1.0 | 0.9 | 0.7 | 1.3 | 1.5 |

### Comparative Example 9 (Co (100) - Mo (10) / calcium carbonate)

In 0.95 part by mass of methanol, 1.24 parts by mass of cobalt (II) nitrate hexahydrate was added and dissolved, and then 0.08 part by mass of hexaammonium heptamolybdate tetrahydrate was added and dissolved so as to obtain a solution G.

The solution G was dripped and mixed with 1 part by mass of calcium carbonate (Ube Material Industries, Ltd.; CS 3N-A30). After the mixing, it was vacuum-dried at 100 degrees cent. for 4 hours. After the drying, it was crushed in a mortar so as to obtain a catalyst. The catalyst contained 10 % by mol of Mo with respect to Co, and 25 % by mass of Co was supported on the calcium carbonate. A carbon fiber was obtained using the catalyst by the same manner as in the Example 11. The evaluation result is shown in Table 5.

### Comparative Example 10 (Co (100) - Ti (10) / calcium carbonate)

In 0.9 part by mass of methanol, 1.24 parts by mass of cobalt (II) nitrate hexahydrate was added and dissolved, and then 0.3 part by mass of nitric acid 70 % solution was added. Then, 0.11 part by mass of titanium (IV) tetra-n-butoxide tetramer was added and dissolved so as to obtain a solution H.

The solution H was dripped and mixed with 1 part by mass of calcium carbonate (Ube Material Industries, Ltd.; CS 3N-A30). After the mixing, it was vacuum-dried at 100 degrees cent. for 4 hours. After the drying, it was crushed in a mortar so as to obtain a catalyst. The catalyst contained 10 % by mol of Ti with respect to Co, and 25 % by mass of Co was supported on the calcium carbonate. A carbon fiber was obtained using the catalyst by the same manner as in the Example 11. The evaluation result is shown in Table 5.

### Comparative Example 11 (Co (100) - V (10) / calcium carbonate)

A catalyst was obtained by the same manner as in the Comparative Example 10, except that 0.05 part by mass of ammonium metavanadate was used instead of titanium (IV) tetra-n-butoxide tetramer. The catalyst contained 10 % by mol of V with respect to Co, and 25 % by mass of Co was supported on the calcium carbonate. A carbon fiber was obtained using the catalyst by the same manner as in the Example 12. The evaluation result is shown in Table 5.

### Comparative Example 12 (Co (100) - Cr (10) / calcium carbonate)

A catalyst was obtained by the same manner as in the Comparative Example 9, except that 0.18 part by mass of chromium (III) nitrate nonahydrate was used instead of hexaammonium heptamolybdate tetrahydrate. The catalyst contained 10 % by mol of Cr with respect to Co, and 25 % by mass of Co was supported on the calcium carbonate. A carbon fiber was obtained using the catalyst by the same manner as in the Example 13. The evaluation result is shown in Table 5.

### Comparative Example 13 (Co (100) - Mn (50) / calcium carbonate)

A catalyst was obtained by the same manner as in the Comparative Example 9, except that 0.61 part by mass of manganese (II) nitrate hexahydrate was used instead of hexaammonium heptamolybdate tetrahydrate. The catalyst contained 50 % by mol of Mn with respect to Co, and 25 % by mass of Co was supported on the calcium carbonate. A carbon fiber was obtained using the catalyst by the same manner as in the Example 14. The evaluation result is shown in Table 5.

### Comparative Example 14 (Fe (70) - Co (30) / calcium carbonate)

A catalyst was obtained by the same manner as in the Example 11, except that titanium (IV) tetra-n-butoxide tetramer and hexaammonium heptamolybdate tetrahydrate were not used. In the catalyst, the molar ratio of Co / Fe was 0.3/0.7, and the total supported amount of Fe and Co with respect to the calcium carbonate was 25 % by mass. Using the catalyst, a carbon fiber was obtained by the same manner as in the Example 11. The evaluation result is shown in Table 5. [Table 5]

**Table 5**

| | Comparative Example | | | | | |
|---|---|---|---|---|---|---|
| | 9 | 10 | 11 | 12 | 13 | 14 |
| Element [I] | - | - | - | - | - | Fe |
| Element [II] | Co | Co | Co | Co | Co | Co |
| Element [III] | - | Ti | V | Cr | Mn | - |
| Element [IV] | Mo | - | - | - | | - |
| Carrier | CaCO₃ | CaCO₃ | CaCO₃ | CaCO₃ | CaCO₃ | CaCO₃ |
| Weight gain (times) | 14 | 6 | 8 | 6 | 3 | 3 |
| Impurity concentration (%) | | | | | | |
| Other than carbon element | 3.3 | 7.5 | 5.6 | 7.5 | 17.0 | 14.5 |
| Elements [I] [II] [III] [IV] | 1.4 | 3.0 | 2.3 | 3.0 | 8.1 | 5.6 |
| Carrier | 1.9 | 4.4 | 3.3 | 4.4 | 8.9 | 8.9 |

By comparing Table 4 and Table 5, it is known that the carbon fiber obtained using the four-component catalyst composed of Fe and Co as its main components supported on calcium carbonate in the present invention had drastically lower impurity concentration.

## Claims

1. A carbon fiber containing [I] Fe element; [II] Co element; [III] at least one element selected from the group consisting of Ti, V and Cr; and [IV] at least one element selected from the group consisting of W and Mo; and in which the graphite layer in the carbon fiber is approximately parallel with the fiber axis of the carbon fiber, the carbon fiber having a fiber diameter of 5 nm or more and 100 nm or less and being tubular.

2. The carbon fiber according to the claim 1, wherein the total content of the metal elements is not more than 10 % by mass and the total content of the element [I], the element [II], the element [III] and the element [IV], excluding the metal elements derived from a carrier, among them is not more than 1.8 % by mass.

3. The carbon fiber according to the claim 1 or 2, wherein the fiber diameter is 5 nm or more and 70 nm or less.

4. The carbon fiber according to any one of the claims 1 to 3, in which the R value in Raman spectroscopic analysis is 0.9 or less, wherein the R value is an intensity ratio ID/IG between peak intensity (ID) in the vicinity of 1360 cm⁻¹ and the peak intensity (Ig) in the vicinity of 1580 cm⁻¹ as measured by Raman spectroscopic spectrum.

5. The carbon fiber according to any one of the claims 1 to 4, wherein the carbon fiber has been heat treated at 2000 to 3500 degrees cent. under an inactive gas atmosphere.

6. A catalyst for production of a carbon fiber, comprising [I] Fe element; [II] Co element; [III] at least one element selected from the group consisting of Ti, V and Cr; and [IV] at least one element selected from the group consisting of W and Mo.

7. The catalyst for production of a carbon fiber according to the claim 6, wherein the element [I], the element [II], the element [III], and the element [IV] are supported on a particulate carrier, and the total amount of the element [I], the element [II], the element [III] and the element [IV], excluding the metal element derived from the carrier, is 1 to 200 % by mass with respect to the particulate carrier.

8. The catalyst for production of a carbon fiber according to the claim 7, in which the carrier is alumina, magnesia, titania, silica, calcium carbonate, calcium hydroxide or calcium oxide.

9. A method of preparing a catalyst for production of a carbon fiber according to the claim 7 or 8, comprising the steps of: dissolving or dispersing [I] a compound containing Fe element; [II] a compound containing Co element; [III] a compound containing at least one element selected from the group consisting of Ti, V and Cr; and [IV] a compound containing at least one element selected from the group consisting of W and Mo in a solvent to obtain a solution or a fluid dispersion, and impregnating a particulate carrier with the solution or the fluid dispersion.

10. A method for producing a carbon fiber comprising a step of bringing a carbon source into contact with the catalyst for production of a carbon fiber according to any one of the claims 6 to 8 in a vapor phase at a temperature of more than 500 degrees cent. and not more than 1000 degrees cent.

11. The method for producing a carbon fiber according to claim 9 or 10, further comprising
a step of heat treatment of the carbon fiber at a temperature of 2000 to 3500 degrees cent. under an inactive gas atmosphere.

12. A composite material comprising the carbon fiber according to any one of the claims 1 to 5.

## Patentansprüche

1. Kohlenstofffaser, die [I] Fe-Element; [II] Co-Element; [III] mindestens ein Element, das aus der aus Ti, V und Cr bestehenden Gruppe ausgewählt ist; und [IV] mindestens ein Element enthält, das aus der aus W und Mo bestehenden Gruppe ausgewählt ist; worin die Graphitschicht in der Kohlenstofffaser annähernd parallel zu der Faserachse der Kohlenstofffaser ist, wobei die Kohlenstofffaser einen Faserdurchmesser von 5 nm oder mehr und 100 nm oder weniger aufweist und röhrenförmig ist.

2. Kohlenstofffaser nach Anspruch 1, wobei der Gesamtgehalt der Metallelemente nicht mehr als 10 Massen-% ist und der Gesamtgehalt des Elements [I], des Elements [II], des Elements [III] und des Elements [IV], ausgeschlossen die von einem Träger abgeleiteten Metallelemente, unter diesen nicht mehr als 1,8 Massen-% ist.

3. Kohlenstofffaser nach Anspruch 1 oder 2, wobei der Fa-serdurchmesser 5 nm oder mehr und 70 nm oder weniger ist.

4. Kohlenstofffaser nach einem der Ansprüche 1 bis 3, wobei der R-Wert in der Raman-Spektroskopieanalyse 0,9 oder weniger ist, wobei der R-Wert ein Intensitätsverhältnis ID/IG zwischen der Peakintensität (ID) in der Nähe von 1360 cm⁻¹ und der Peakintensität (Ig) in der Nähe von 1580 cm⁻¹, gemessen durch Raman-Spektroskopie, ist.

5. Kohlenstofffaser nach einem der Ansprüche 1 bis 4, wobei die Kohlenstofffaser bei 2000 bis 3500°C unter einer inaktiven Gasatmosphäre hitzebehandelt worden ist.

6. Katalysator zur Produktion einer Kohlenstofffaser, der [I] Fe-Element; [II] Co-Element; [III] mindestens ein Element umfasst, das aus der aus Ti, V und Cr bestehenden Gruppe aus-gewählt ist; und [IV] mindestens ein Element, das aus der aus W und Mo bestehenden Gruppe ausgewählt ist.

7. Katalysator zur Produktion einer Kohlenstofffaser nach Anspruch 6, wobei das Element [I], das Element [II], das Element [III] und das Element [IV] auf einem teilchenförmigen Träger aufgetragen sind und die Gesamtmenge des Elements [I], des Elements [II], des Elements [III] und des Elements [IV], ausgeschlossen das von dem Träger abgeleitete Metallelement, 1 bis 200 Massen-% in Bezug auf den teilchenförmigen Träger ist.

8. Katalysator für die Produktion einer Kohlenstofffaser nach Anspruch 7, wobei der Träger Aluminiumoxid, Magnesiumoxid, Titanoxid, Siliciumdioxid, Calciumcarbonat, Calciumhydroxid oder Calciumoxid ist.

9. Verfahren zum Herstellen eines Katalysators für die Produktion einer Kohlenstofffaser nach Anspruch 7 oder 8, welches die folgenden Stufen umfasst:
das Auflösen oder Dispergieren [I] einer Fe-Element enthal-tenden Verbindung; [II] einer Co-Element enthaltenden Verbindung; [III] einer Verbindung, die mindestens ein Element enthält, das aus der aus Ti, V und Cr bestehenden Gruppe ausge-wählt ist; und [IV] einer Verbindung, die mindestens ein Element enthält, das aus der aus W und Mo bestehenden Gruppe ausgewählt ist, in einem Lösungsmittel, wobei eine Lösung oder eine Fluiddispersion erhalten wird, und das Imprägnieren eines teilchenförmigen Trägers mit der Lösung oder der Fluiddispersion.

10. Verfahren zur Produktion einer Kohlenstofffaser, welches eine Stufe umfasst, in der eine Kohlenstoffquelle mit dem Ka-talysator für die Produktion der Kohlenstofffaser nach einem der Ansprüche 6 bis 8 in einer Dampfphase bei einer Temperatur von mehr als 500°C und nicht mehr als 1000°C in Kontakt gebracht wird.

11. Verfahren zur Produktion einer Kohlenstofffaser nach Anspruch 9 oder 10, das außerdem eine Stufe umfasst, in der die Kohlenstofffaser bei einer Temperatur von 2000 bis 3500°C unter einer inaktiven Gasatmosphäre hitzebehandelt wird.

12. Verbundmaterial, das die Kohlenstofffaser nach einem der Ansprüche 1 bis 5 umfasst.

## Revendications

1. Fibre de carbone contenant [I] l'élément Fe ; [II] l'élément Co ; [III] au moins un élément sélectionné du groupe consistant en Ti, V et Cr ; et [IV] au moins un élément sélectionné du groupe consistant en W et Mo ; et dans laquelle la couche de graphite dans la fibre de carbone est approximativement parallèle avec l'axe de fibre de la fibre de carbone, la fibre de carbone ayant un diamètre de fibre de 5 nm ou plus et 100 nm ou moins et étant tubulaire.

2. Fibre de carbone selon la revendication 1, dans laquelle la teneur totale des éléments métalliques n'est pas plus que 10% en masse et la teneur totale de l'élément [I], l'élément [II], l'élément [III] et l'élément [IV], en excluant les éléments métalliques dérivés d'un support, parmi eux n'est pas plus de 1,8% en masse.

3. Fibre de carbone selon la revendication 1 ou 2, dans laquelle le diamètre de fibre est 5 nm ou plus et 70 nm ou moins.

4. Fibre de carbone selon l'une quelconque des revendications 1 à 3, dans laquelle la valeur R dans l'analyse spectroscopique Raman est 0,9 ou moins, dans laquelle la valeur R est un rapport d'intensité ID/IG entre l'intensité du pic (ID) dans le voisinage de 1360 cm⁻¹ et l'intensité du pic (IG) dans le voisinage de 1580 cm⁻¹ comme mesurées par spectre spectroscopique Raman.

5. Fibre de carbone selon l'une quelconque des revendications 1 à 4, dans laquelle la fibre de carbone a été traitée thermiquement à 2000 jusqu'à 3500 degrés centigrades sous une atmosphère de gaz inactif.

6. Catalyseur pour la production d'une fibre de carbone, comprenant [I] l'élément Fe ; [II] l'élément Co ; [III] au moins un élément sélectionné du groupe consistant en Ti, V et Cr ; et [IV] au moins un élément sélectionné du groupe consistant en W et Mo.

7. Catalyseur pour la production d'une fibre de carbone selon la revendication 6, dans lequel l'élément [I], l'élément [II], l'élément [III] et l'élément [IV] sont transportés sur un support particulaire, et la quantité totale de l'élément [I], l'élément [II], l'élément [III] et l'élément [IV], en excluant les éléments métalliques dérivés du support, est 1 à 200% en masse par rapport au support particulaire.

8. Catalyseur pour la production d'une fibre de carbone selon la revendication 7, dans lequel le support est de l'alumine, de la magnésie, de l'oxyde de titane, de la silice, du carbonate de calcium, de l'hydroxyde de carbone ou de l'oxyde de calcium.

9. Méthode de préparation d'un catalyseur pour la production d'une fibre de carbone selon la revendication 7 ou 8, comprenant les étapes de :
dissoudre ou disperser [I] un composé contenant l'élément Fe; [II] un composé contenant l'élément Co ; [III] un composé contenant au moins un élément sélectionné du groupe consistant en Ti, V et Cr ; et [IV] un composé contenant au moins un élément sélectionné du groupe consistant en W et Mo dans un solvant pour obtenir une solution ou une dispersion fluide, et imprégner un support particulaire avec la solution ou la dispersion fluide.

10. Méthode pour produire une fibre de carbone comprenant une étape consistant à amener une source de carbone en contact avec le catalyseur pour la production d'une fibre de carbone selon l'une quelconque des revendications 6 à 8 dans une phase vapeur à une température de plus de 500 degrés centigrades et pas plus de 1000 degrés centigrades.

11. Méthode pour produire une fibre de carbone selon la revendication 9 ou 10, comprenant en outre
une étape de traitement thermique de la fibre de carbone à une température de 2000 à 3500 degrés centigrades sous une atmosphère de gaz inactif.

12. Matériau composite comprenant la fibre de carbone selon l'une quelconque des revendications 1 à 5.
